# EUROPEAN PATENT SPECIFICATION

(11) **EP 0 856 811 B1**
(45) Date of publication and mention of the grant of the patent: **28.08.2002**
(21) Application number: 98200667.8
(22) Date of filing: 22.04.1992
(51) Int. Cl.: G06K 15/00

(54) **Printer control apparatus**
Druckersteuerung
Appareil de contrôle pour imprimante

(30) Priority: 23.04.1991 JP 9230691
(43) Date of publication of application: 05.08.1998
(62) Divisional of application: 92303575.2
(73) Proprietor: CANON KABUSHIKI KAISHA, Tokyo (JP)
(72) Inventor: Takahashi, Hiroharu, Ohta-ku, Tokyo (JP)
(74) Representative: Beresford, Keith Denis Lewis

(56) References cited:
- EP-A- 0 229 539
- EP-A- 0 310 228
- EP-A- 0 311 111

## Description

### BACKGROUND OF THE INVENTION

### Field of the Invention

The present invention relates to an output apparatus which requires a relatively small memory capacity in order to output information received from a host computer as high-density data.

### Description of the Related Art

Output apparatuses such as laser beam printers are generally used to output data from computers. Laser beam printers of low density, e.g. 300dpi, have been increasingly employed because of their quiet operation, reasonable price and compact size.

Recently, the development of a higher-density printer engine unit has been undertaken in order to further upgrade the print quality. A high-density printer engine of 600dpi has now been developed. A printer controller for such a printer engine analyzes printing information sent to it and, according to the analysis, develops the printing information over the bit map memory, at a designated density. In the known art, it is required for the printer controller to have a bit map memory capacity corresponding to the print density of the printer engine connected thereto. For example, the memory of the controller connected to a printer engine of 600dpi is required to be four times as large as that of the controller connected to a printer engine of 300dpi.

Since a controller for high-density printing (600dpi) must employ a bit map memory four times as large as that employed by a controller for low-density printing (300dpi), a high-density (600dpi) laser beam printer employing such a controller and engine becomes rather large and expensive, especially in a situation where color or half-tone images are to be formed.

It is a concern of the present invention to solve the above-mentioned problems by providing an output apparatus with the features of claim 1.

Another aspect of the present invention provides a method as set out in claim 6.

Further features and advantages of the present invention will become apparent in the following description of the preferred embodiments with reference to the attached drawings.

### BRIEF DESCRIPTION OF THE DRAWINGS

Fig. 1 is a block diagram of the basic construction of a printing apparatus according to one embodiment of the present invention.
Fig. 2, comprising Figs. 2(A) and 2(B), is a flowchart of printing control for the embodiment illustrated in Fig. 1.

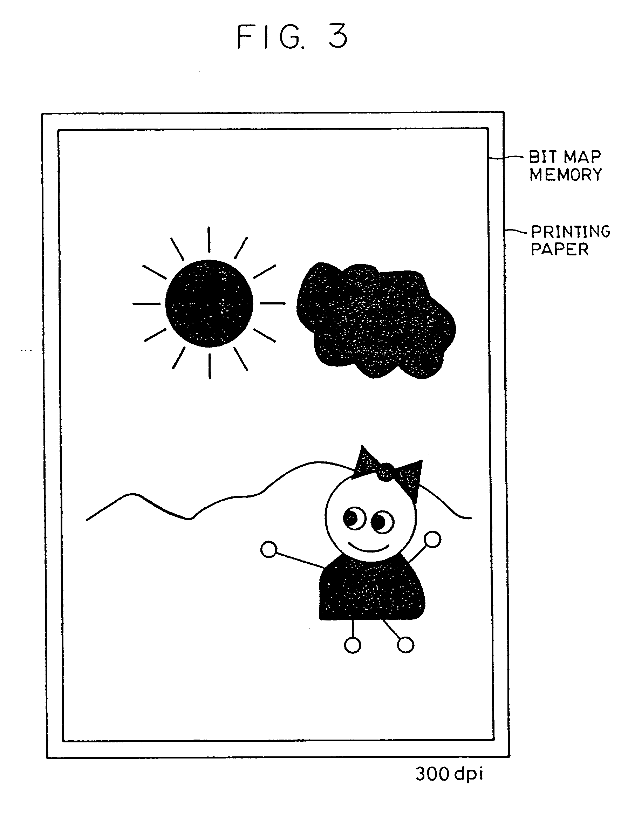

Fig. 3 illustrates a bit map memory for graphic data.
Fig. 4 illustrates a bit map memory for text data.
Fig. 5, comprising Figs 5(A) and 5(B), is a flowchart of printing control.
Fig. 6 illustrates the internal construction of a laser beam printer. Fig. 7 shows exemplary commands.

### DETAILED DESCRIPTION

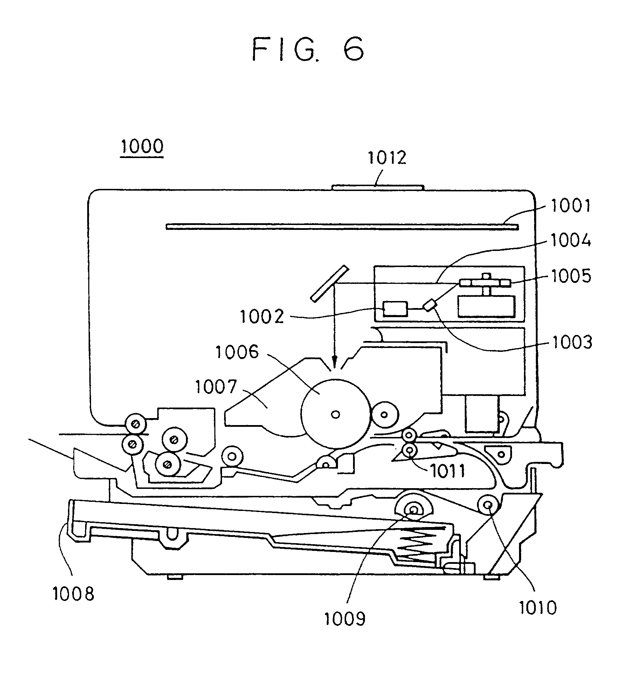

Fig. 6 shows a laser beam printer (referred to as "an LBP" hereinafter) according to this embodiment, which is able to register character patterns and form data received from a data source, i.e. a host computer (not shown).

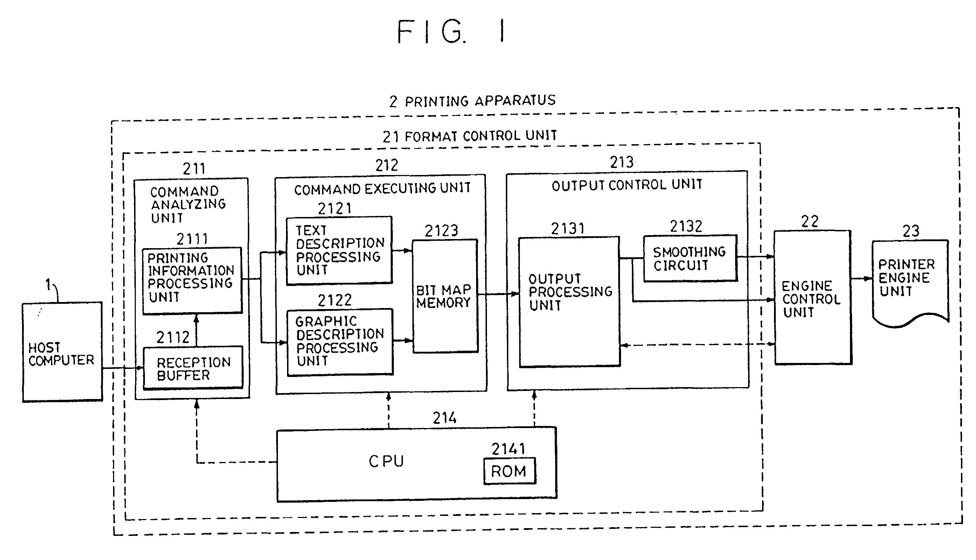

Referring to Fig. 6, an LBP 1000 (corresponding to numeral 2 in Fig. 1) receives and stores the information from a host computer (denoted by numeral 1 in Fig. 1), e.g. character information (character code), form data and macro instructions. According to the information, the LBP 1000 generates character patterns, form patterns, etc., to form an image on a recording medium such as recording paper. An operation panel 1012 has a switch, an LED display, etc. arranged thereon. A printer control unit 1001 performs overall control of the LBP and analyzes information, such as character information, received from the host computer. The printer control unit 1001 converts the character data into video signals of the corresponding character patterns and sends the video signals to a laser driver 1002.

The laser driver 1002 is a circuit which drives a semiconductor laser 1003. According to the video signals from the printer control unit 1001, the laser driver 1002 switches on and off the laser beam emission of the semiconductor laser 1003. The laser beam 1004 is reflected by a rotary polygon mirror 1005 for scanning the surface of an electrostatic drum 1006. An electrostatic latent image of the character patterns is thus formed on the electrostatic drum 1006. The latent image is developed by a developer unit 1007 provided near the surface of the electrostatic drum 1006. The developed image is transferred to recording paper. The recording paper used is of a cut-sheet type. The cut-sheet recording papers are stored in a paper cassette 1008, which is mounted to the LBP 1000. A pick-up roller 1009 and conveying rollers 1010, 1011 feed a cut-sheet recording paper from the cassette 1008 to the electrostatic drum 1006 inside the apparatus.

The construction of the system according to this embodiment is illustrated in Fig. 1. In this figure, a host computer 1 outputs printing data including print data and control codes to a printing apparatus 2.

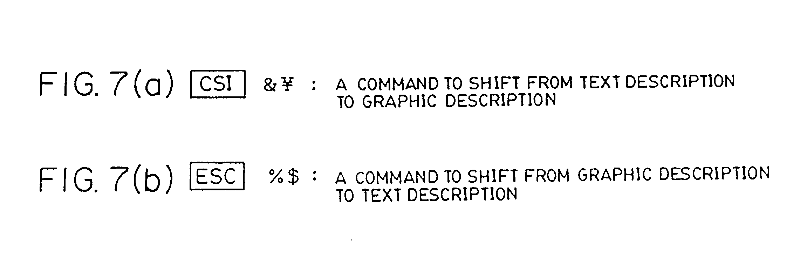

The printing apparatus 2 is composed of format control unit 21, an engine control unit 22 and a printer engine unit 23. The format control unit 21 is in turn composed of a command analyzing unit 211, a command executing unit 212, and an output control unit 213, and the format control unit 21 comprises a printing control means according to the present invention. The printing information from the host computer 1 is stored in a reception buffer 2112, and is analyzed by a printing information processing unit 2111. The information processing unit 2111 determines whether the received printing information is a command concerning text description or a command concerning graphic description or a command of another kind. Fig. 7(a) shows a representative command for graphic description. If processing unit 2111 encounters a command like that in Fig. 7(A), then graphic description processing is performed. If, on the other hand, processing unit 2111 encounters a command like that in Fig. 7(b), which is a representative command for text description, then text description processing is performed.

Commands not concerning text or graphic description are executed by a command analyzing unit 211. A command concerning description is executed by a command executing unit 212. In the text description processing, text data is operated by a text description processing unit 2121, and the processed data is serially developed into dot data over a bit map memory 2123. In the graphic description processing, graphic data is operated by a graphic description processing unit 2122, and the processed data is serially developed into dot data over a bit map memory 2123. The developed dot data in either of the processings is serially sent to an output processing unit 2131 of an output control unit 213. The output processing unit 2131 converts the data from the bit map memory 2123 into a video signal. Graphic description data is processed to upgrade print quality by a smoothing circuit 2132 before conversion to a video signal. The video signal is outputted to the engine control unit 22. The output processing unit 2131 also exchanges information, as depicted by the dotted arrow, such as engine control commands and the status of various actions of a printer engine, with the engine control unit 22 in order to adjust the timing of image transfer to the engine control unit 22. A CPU 214 controls the overall control system of the format control unit 214, according to the control program of the CPU 214 stored in a ROM 2141. The engine control unit 22 controls various printing means of a printer engine unit 23. The printer engine unit 23 forms a permanently visible image on recording paper from the image described on the bit map memory according to the printing information received from the host computer.

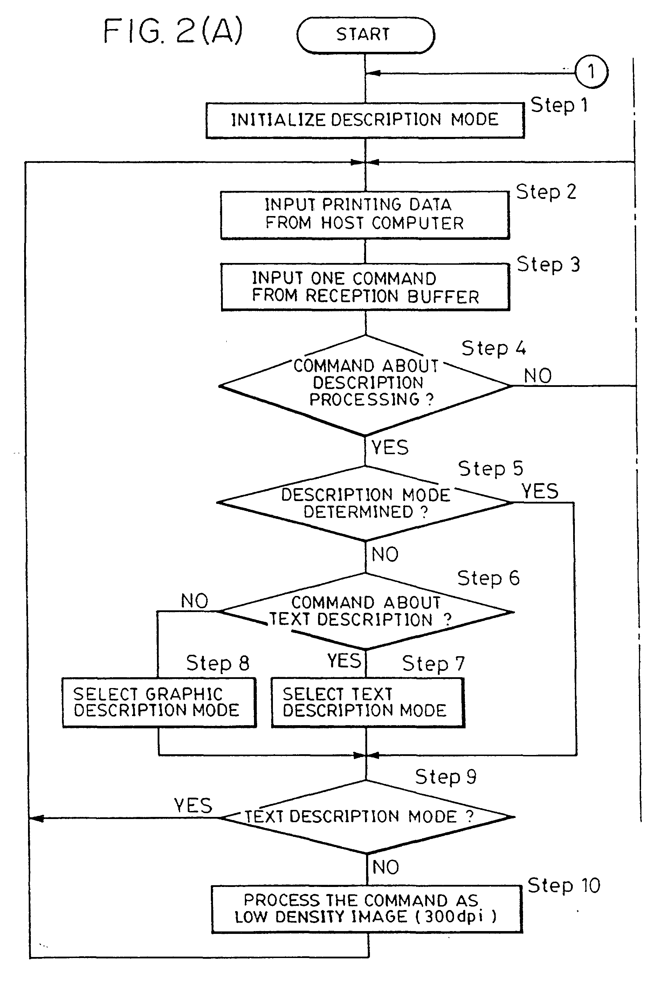

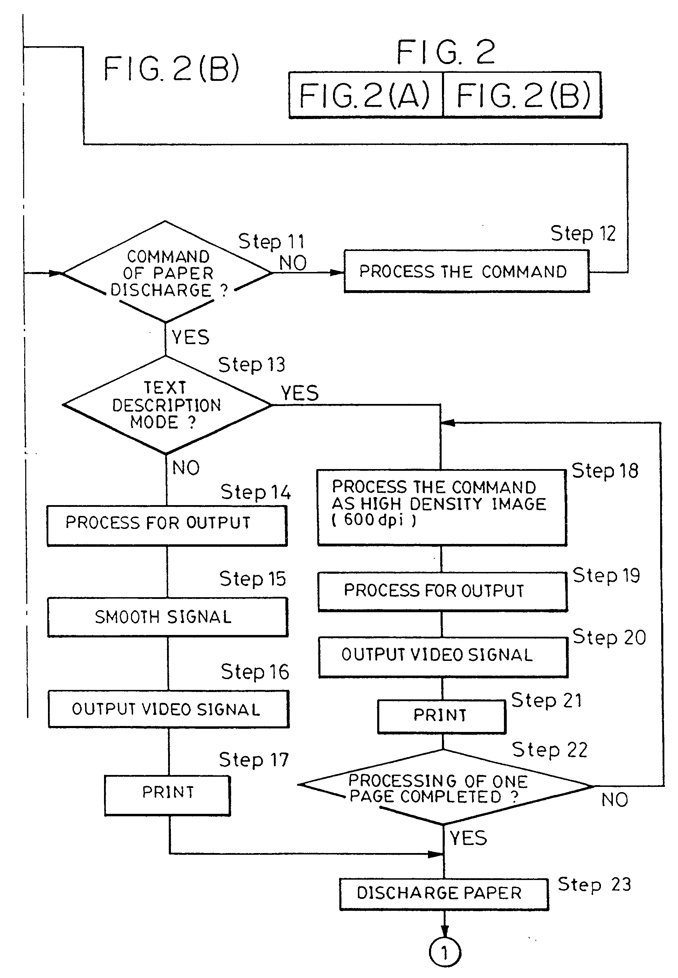

The processing procedure will be described with reference to the flowchart shown in Fig. 2. The processing steps are denoted by numerals 1 to 23. Before starting the print processing of one page, the description mode is initialized (Step 1). The printing data from the host computer 1 is stored in the reception buffer 2112 (Step 2). The printing information processing unit 2111 retrieves one command from the reception buffer 2112 (Step 3). The printing information processing unit 2111 finds out whether the retrieved command is a command concerning text or graphic description processing (Step 4). If it is a description-concerning command, processing proceeds to Step 5.

At step 5, it is checked whether the description mode has been determined. If it has been determined, processing proceeds to Step 9 without changing description modes. If it has not been determined, the printing information processing unit 2111 checks whether the retrieved command is a text description command or a graphic description command (Step 6). If it is a text description command, the text description mode is selected (Step 7). If it is a graphic description command, the graphic description mode is selected (Step 8).

At Step 9, it is checked whether the determined description mode is the text mode or the graphic mode. If it is the graphic description mode, processing proceeds to Step 10, where the graphic description processing unit 2122 develops the received graphic description command into dot data on the bit map memory 2123 to describe one page of a low-density (300dpi) image thereon. When the description processing is completed, the procedure returns to Step 2. If, on the other hand, the description mode is the text description mode, the text description processing is performed but first processing from Step 2 to Step 9 is repeated until a paper-discharge command is retrieved.

If it is determined that the retrieved command is not a command concerning the description processing at Step 4, the procedure goes to Step 11, where it is determined whether the command is a paper-discharge command. If it is not a paper-discharge command, the command analyzing unit 211 executes the command (Step 12), and the procedure returns to Step 2.

If it is determined that the command is a paper-discharge command at Step 11, the procedure goes to Step 13, where it is determined whether the mode is the graphic description mode or the text description mode.

In the graphic mode, the procedure goes to step 14, where the output processing is performed. In output processing, the output processing unit 2131 exchanges information, such as engine control commands or the status of various actions of the printer engine, with the engine control unit 22 and, thus, adjusts the timing of image transfer to the engine control unit 22. For example, the print resolutions at Step 17 and Step 21 are different from each other, and the appropriate resolution is set in output processing. The resolution can be changed by known means such as by varying beam clock frequency, and/or paper-feeding speed.

After output processing (Step 14), the content of the bit map memory 2123 is smoothed by the smoothing circuit 2134 (Step 15). The smoothed signals are converted to video signals to be outputted to the engine control unit 22 (Step 16). In smoothing-out processing, notches of the dot pattern are smoothed out, e.g. by reducing the diameter of the dots, in accordance with known technique such as those described in U.S. Patent No. 4,878,068, the contents of which are incorporated herein by reference.

The engine control unit 22 performs print processing, i.e. controls various printing means of the printer engine unit 23 (Step 17). Then, the printer engine unit 23 forms a permanently visible image on recording paper and discharges such recording paper (Step 23). When the above-described processing is completed, the procedure returns to Step 1.

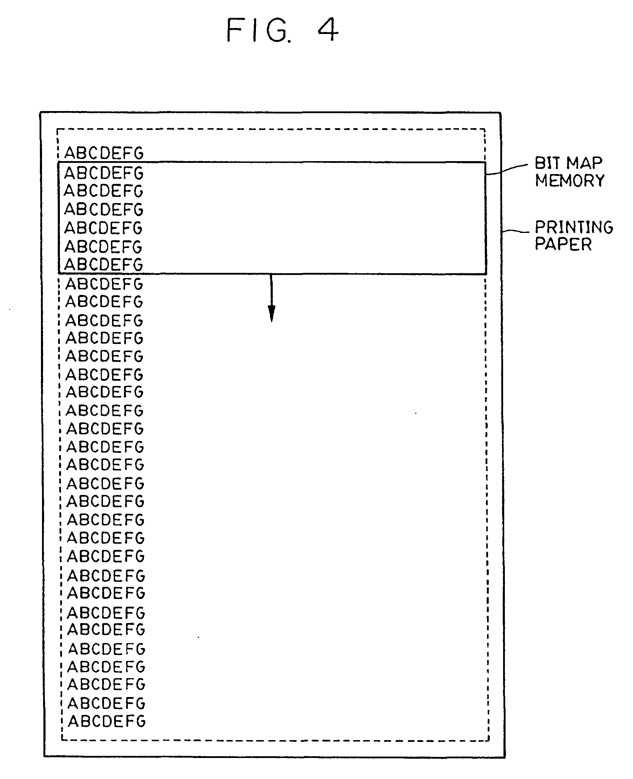

In the text description mode, the procedure goes from Step 13 to Step 18, where the text description processing unit 2121 develops dot data at a high-density image (600dpi) from the retrieved text description command, on the bit map memory 2123. The capacity of the bit map memory 2123 is not so large as to store an entire page of a high-density image (600dpi). Thus, the bit map memory 2123 stores, at any one time, only a portion (or band) thereof (e.g., a quarter of the page) defined by a virtual window assumed to move over the page of the printing paper on which the current printing is to be made, as shown in Fig. 4. In the text description mode, the above-mentioned description processing to the bit map memory 2123 is performed simultaneously with conversion processing of data to video signals and print processing. In other words, the virtual window moves in the direction indicated by the arrow in Fig. 4, at the same speed as the printing paper is conveyed. Processing of Steps 18 to 22 are simultaneously performed. At Step 19, the output processing unit 2131 exchanges information, such as engine control commands or the status of various actions of the printer engine, with the engine control unit 22 in order to adjust the timing of image transfer to the engine control unit 22. At Step 20, the dot data of the bit map memory 2123 is directly converted to video signals to be outputted to the engine control unit 22. At Step 21, the engine control unit 22 performs print processing by controlling various printing means of the printer engine unit 23. Also, the printer engine unit 23 prints a permanently visible image on the printing paper. The processing of Steps 18 to 21 is repeated until one page of the printing is completed (Step 22). When it is completed, the printed paper is discharged (Step 23).

When the above-described processing is completed, the procedure returns to Step 1.

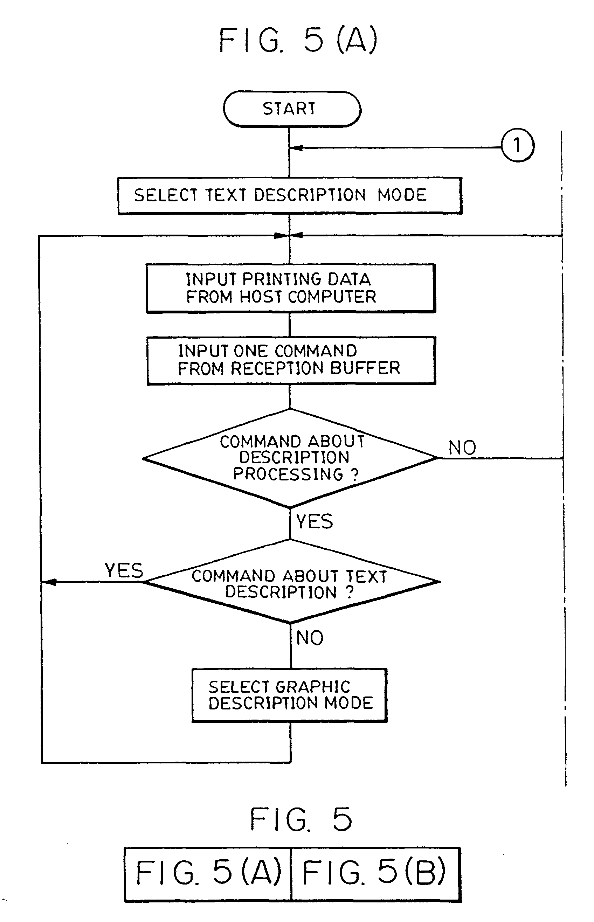

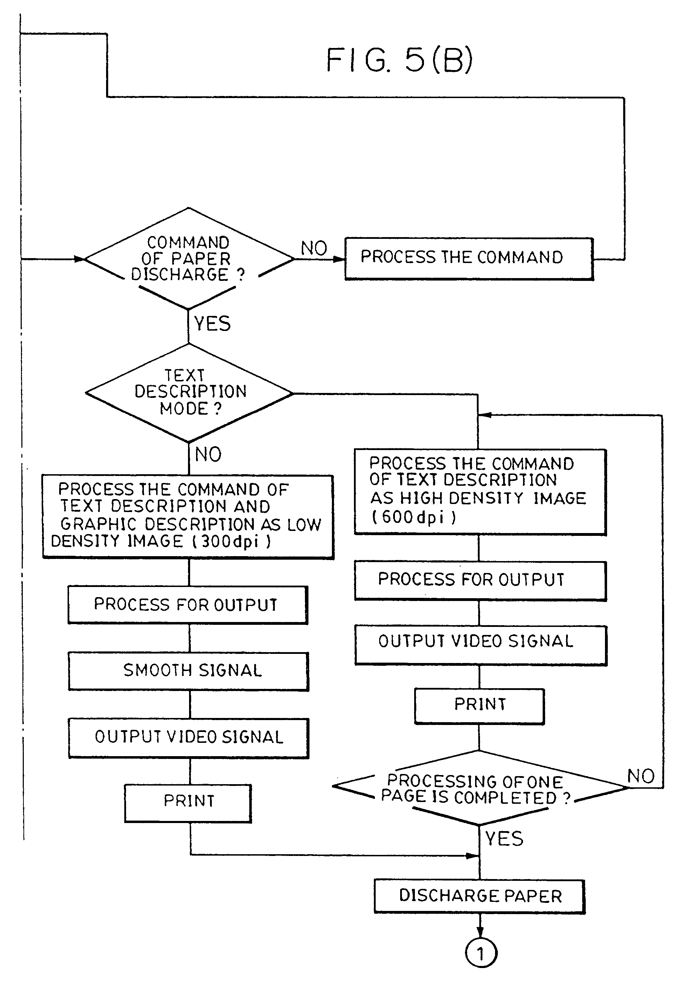

In the above procedure the description mode is selected according to the analysis of inputted information (e.g. expressed in page description language) . In the procedure as illustrated in Fig. 5, each command retrieved is examined whether it is a text description command or a graphic description command. If the one page of retrieved data are all text description commands, the one page of data are divided into portions to be serially developed as a high-density image (600dpi) on the bit map memory (band processing) and to be serially printed. If the one page of retrieved data includes any number of graphic description commands, the one page of data are developed as a low-density image (300dpi) on the bit map memory. The developed dot data are smoothed for outputting.

As described above, the print density is changed according to the kind of printing. Therefore, if this method is employed, a bit map memory of large capacity is not required. Highly-defined printing can be performed by a high-density (600dpi) laser beam printer employing a bit map memory having the same capacity as the bit map memory employed in a conventional printer controller of low-density printing (300dpi).

An output method for an embodiment of the present invention comprises the steps of: analyzing the information, e.g. from a host computer, to determine whether the information is text data or graphic data; in the case of text data, dividing one page of data into portions to develop the data as dot patterns of high resolution; and, in the case of graphic data, developing the entire page of data as a dot pattern of low resolution. Such divided text description processing does not cause inconvenient delay because the development of text data into dot patterns is quick, compared with that of graphic data and can be completed before the developed dot patterns are printed.

## Claims

1. A printer control apparatus for generating and outputting image data, said apparatus comprising input means (2112) for inputting control data from an external device;
generating means (21) for generating image data either of a first resolution or a lower second resolution in response to the input data and for storing the generated image in storage means (2123) from which the data can be read for printing; and
**characterised by** control means (211) for operating said generating means in response to the input control data either in a first mode in which the image data of a page is generated at the first resolution in bands which are consecutively stored in said storage means, the stored data of one band being read out for printing in parallel with storing of another band, or in a second mode where the image data of one page is generated at the lower second resolution and stored in said storage means prior to being read for printing.

2. Apparatus according to claim 1, further comprising processing means (2132) adapted to smooth the image data generated at said second resolution.

3. Apparatus according to either of claims 1 or 2 further comprising printing means (22, 23) for printing an image based on the image data read from said storage means.

4. Apparatus according to any one of the preceding claims and further comprising means (211) for determining on the basis of the control data whether the image data is to be generated with either the first resolution or the second resolution.

5. Apparatus according to claim 4 and further comprising analysing means (211) for analysing said input data to determine whether it is text data or graphics data and wherein when it is determined that the input data represents text data the image data is generated in said first mode, and when it is determined that the input data is graphics data the image data is generated in said second mode.

6. A method of generating and outputting image data, comprising inputting control data from an external device to a printer control apparatus;
generating image data either of a first resolution or a lower second resolution in response to the input data and storing the generated image in storage means (2123) from which the data can be read for printing; and
utilising control means (211) to operate said generating means in response to the input control data either in a first mode in which the image data of a page is generated at the first resolution in bands which are consecutively stored in said storage means, the stored data of one band being read out for printing in parallel with storing of another band, or in a second mode where the image data of one page is generated at the lower second resolution and stored in said storage means prior to being read for printing.

7. A method according to claim 6 further comprising smoothing the image data generated at the second resolution.

8. A method according to either of claims 6 or 7 further comprising printing an image based on the image data read from said storage means.

9. A method according any one of claims 7, 8 or 9 and further comprising determining on the basis of the control data whether the image data is to be generated with either the first resolution or the second resolution.

10. A method according to claim 9, and further comprising analysing said input data to determine whether it is text data or graphics data and wherein when it is determined that the input data represents text data the image data is generated in said first mode, and when it is determined that the input data is graphics data the image data is generated in said second mode.

## Patentansprüche

1. Druckersteuerungsgerät zur Erzeugung und Ausgabe von Bilddaten, wobei das Gerät eine Eingabeeinrichtung (2112) zur Eingabe von Steuerungsdaten von einer externen Vorrichtung und
eine Erzeugungseinrichtung (21) zur Erzeugung von Bilddaten entweder einer ersten Auflösung oder einer niedrigeren zweiten Auflösung in Reaktion auf die eingegebenen Daten sowie zur Speicherung des erzeugten Bilds in einer Speichereinrichtung (2123) umfasst, aus der die Daten zum Drucken ausgelesen werden können,
**gekennzeichnet durch** eine Steuerungseinrichtung (211) zum Betreiben der Erzeugungseinrichtung in Reaktion auf die eingegebenen Steuerungsdaten entweder in einer ersten Betriebsart, in der die Bilddaten einer Seite mit der ersten Auflösung in Streifen erzeugt werden, die fortlaufend in der Speichereinrichtung gespeichert werden, wobei die gespeicherten Daten eines Streifens zum Drucken parallel mit einer Speicherung eines anderen Streifens ausgelesen werden, oder in einer zweiten Betriebsart, in der die Bilddaten einer Seite mit der niedrigeren zweiten Auflösung erzeugt werden und in der Speichereinrichtung gespeichert werden, bevor sie zum Drucken ausgelesen werden.

2. Gerät nach Anspruch 1, mit einer Verarbeitungseinrichtung (2132) zum Glätten der mit der zweiten Auflösung erzeugten Bilddaten.

3. Gerät nach einem der Ansprüche 1 oder 2, mit einer Druckeinrichtung (22, 23) zum Drucken eines Bilds auf der Grundlage der aus der Speichereinrichtung ausgelesenen Bilddaten.

4. Gerät nach einem der vorhergehenden Ansprüche und mit einer Einrichtung (211) zur Bestimmung auf der Grundlage der Steuerungsdaten, ob die Bilddaten entweder mit der ersten Auflösung oder mit der zweiten Auflösung zu erzeugen sind.

5. Gerät nach Anspruch 4 und mit einer Analyseeinrichtung (211) zur Analyse der eingegebenen Daten, um zu bestimmen, ob es Textdaten oder Graphikdaten sind, und wobei bei einer Bestimmung, dass die eingegebenen Daten Textdaten darstellen, die Bilddaten in der ersten Betriebsart erzeugt werden und bei einer Bestimmung, dass die eingegebenen Daten Grafikdaten sind, die Bilddaten in der zweiten Betriebsart erzeugt werden.

6. Verfahren zum Erzeugen und Ausgeben von Bilddaten, mit den Schritten Eingeben von Steuerungsdaten von einer externen Vorrichtung in ein Druckersteuerungsgerät,
Erzeugen von Bilddaten entweder einer ersten Auflösung oder einer niedrigeren zweiten Auflösung in Reaktion auf die eingegebenen Daten sowie Speichern des erzeugten Bilds in einer Speichereinrichtung (2123), aus der die Daten zum Drucken ausgelesen werden können, und
Verwenden einer Steuerungseinrichtung (211) zum Betreiben einer Erzeugungseinrichtung in Reaktion auf die eingegebenen Steuerungsdaten entweder in einer ersten Betriebsart, in der die Bilddaten einer Seite mit der ersten Auflösung in Streifen erzeugt werden, die fortlaufend in der Speichereinrichtung gespeichert werden, wobei die gespeicherten Daten eines Streifens zum Drucken parallel mit einer Speicherung eines anderen Streifens ausgelesen werden, oder in einer zweiten Betriebsart, in der die Bilddaten einer Seite mit der niedrigeren zweiten Auflösung erzeugt werden und in der Speichereinrichtung gespeichert werden, bevor sie zum Drucken ausgelesen werden.

7. Verfahren nach Anspruch 6, mit einem Schritt zum Glätten der mit der zweiten Auflösung erzeugten Bilddaten.

8. Verfahren nach einem der Ansprüche 6 oder 7, mit einem Schritt zum Drucken eines Bilds auf der Grundlage der aus der Speichereinrichtung ausgelesenen Bilddaten.

9. Verfahren nach einem der Ansprüche 7, 8 oder 9 und mit einem Schritt zum Bestimmen auf der Grundlage der Steuerungsdaten, ob die Bilddaten entweder mit der ersten Auflösung oder mit der zweiten Auflösung zu erzeugen sind.

10. Verfahren nach Anspruch 9 und mit einem Schritt zum zur Analysieren der eingegebenen Daten, um zu bestimmen, ob es Textdaten oder Graphikdaten sind, und wobei bei einer Bestimmung, dass die eingegebenen Daten Textdaten darstellen, die Bilddaten in der ersten Betriebsart erzeugt werden und bei einer Bestimmung, dass die eingegebenen Daten Grafikdaten sind, die Bilddaten in der zweiten Betriebsart erzeugt werden.

## Revendications

1. Appareil de commande d'imprimante destiné à générer et délivrer en sortie des données d'image, ledit appareil comportant un moyen d'entrée (2112) pour l'entrée de données de commande depuis un dispositif extérieur ;
un moyen de génération (21) destiné à générer des données d'image soit d'une première résolution, soit d'une seconde résolution, inférieure, en réponse aux données d'entrée et à stocker l'image générée dans un moyen de stockage (2123) duquel les données peuvent être lues pour l'impression ; et
**caractérisé par** un moyen de commande (211) destiné à faire fonctionner ledit moyen de génération en réponse aux données de commande d'entrée soit dans un premier mode dans lequel les données d'image d'une page sont générées à la première résolution en des bandes qui sont stockées consécutivement dans ledit moyen de stockage, les données stockées d'une bande étant extraites pour l'impression en parallèle avec le stockage d'une autre bande, soit dans un second mode dans lequel les données d'image d'une page sont générées à la seconde résolution, inférieure, et stockées dans ledit moyen de stockage avant d'être lues pour l'impression.

2. Appareil selon la revendication 1, comportant en outre un moyen de traitement (2132) conçu pour lisser les données d'image générées à ladite seconde résolution.

3. Appareil selon la revendication 1 ou 2, comportant en outre un moyen d'impression (22, 23) destiné à imprimer une image sur la base des données d'image extraites dudit moyen de stockage.

4. Appareil selon l'une quelconque des revendications précédentes et comportant en outre un moyen (211) destiné à déterminer, sur la base des données de commande, si les données d'image doivent être générées avec la première résolution ou la seconde résolution.

5. Appareil selon la revendication 4 et comportant en outre un moyen d'analyse (211) destiné à analyser lesdites données d'entrée pour déterminer s'il s'agit de données de texte ou de données graphiques, et dans lequel, lorsqu'il est déterminé que les données d'entrée représentent des données de texte, les données d'image sont générées dans ledit premier mode, et lorsqu'il est déterminé que les données d'entrée sont des données graphiques, les données d'image sont générées dans ledit second mode.

6. Procédé pour générer et délivrer en sortie des données d'image, comprenant l'entrée de données de commande depuis un dispositif extérieur à un appareil de commande d'imprimante ;
la génération de données d'image soit d'une première résolution, soit d'une seconde résolution, inférieure, en réponse aux données d'entrée et le stockage de l'image générée dans un moyen de stockage (2123) duquel les données peuvent être extraites pour une impression ; et
l'utilisation d'un moyen de commande (211) pour faire fonctionner ledit moyen de génération en réponse aux données de commande d'entrée soit dans un premier mode dans lequel les données d'image d'une page sont générées à la première résolution en bandes qui sont stockées consécutivement dans ledit moyen de stockage, les données stockées d'une bande étant extraites pour une impression en parallèle avec le stockage d'une autre bande, soit dans un second mode dans lequel les données d'image d'une page sont générées à la seconde résolution, inférieure, et stockées dans ledit moyen de stockage avant d'être extraites pour l'impression.

7. Procédé selon la revendication 6, comprenant en outre le lissage des données d'image générées à la seconde résolution.

8. Procédé selon l'une des revendications 6 et 7, comprenant en outre l'impression d'une image sur la base des données d'image extraites dudit moyen de stockage.

9. Procédé selon l'une quelconque des revendications 7, 8 ou 9 et comprenant en outre la détermination, sur la base des données de commande, si les données d'image doivent être générées avec la première résolution ou la seconde résolution.

10. Procédé selon la revendication 9, et comprenant en outre l'analyse desdites données d'entrée pour déterminer s'il s'agit de données de texte ou de données graphiques, et dans lequel, lorsqu'il est déterminé que les données d'entrée représentent des données de texte, les données d'image sont générées dans ledit premier mode, et lorsqu'il est déterminé que les données d'entrée sont des données graphiques, les données d'image sont générées dans ledit second mode.
